# EUROPÄISCHE PATENTSCHRIFT

(11) **EP 0 564 760 B1**
(45) Veröffentlichungstag und Bekanntmachung des Hinweises auf die Patenterteilung: **26.08.1998**
(21) Anmeldenummer: 93100511.0
(22) Anmeldetag: 15.01.1993
(51) Int. Cl.: C04B 41/48

(54) **Verfahren und Mittel zum Imprägnieren von mineralischen Materialien**
Process and means for impregnating mineral materials
Procédé et moyen pour imprégner des matériaux minéraux

(30) Priorität: 25.03.1992 DE 4209556
(43) Veröffentlichungstag der Anmeldung: 13.10.1993
(73) Patentinhaber: Bakelite AG, 58642 Iserlohn-Letmathe (DE)
(72) Erfinder: Mathes, Alfred, Dr., W-4134 Rheinberg (DE); Zehrfeld, Jürgen, Dr., W-4233 Voerde (DE)

(56) Entgegenhaltungen:
- EP-A- 0 097 784
- EP-A- 0 357 886
- AT-B- 351 996
- DE-A- 3 737 039
- ENCYCLOPEDIA OF POLYMER SCIENCE AND ENGINEERING, vol.6, p.343,344,349

## Beschreibung

Die Erfindung betrifft ein neues Verfahren und ein neues, in diesem verfahren einsetzbares Mittel auf der Basis von Epoxidharz/Härter-Systemen zur Imprägnierung von mineralischen Materialien, wie z. B. bewitterten Außenfassaden, Betonflächen, Industriefußböden oder auch Skulpturen aus natürlichen Steinen, wie Sandstein.

Die Beständigkeit solcher mineralischer Materialien gegen mechanische, chemische oder witterungsbedingte Zerstörung ist sowohl von der Festigkeit und der chemischen Beschaffenheit des Gesteins als auch von der Feuchtigkeitsaufnahme abhängig, wobei letzteres durch die Porosität ebenso wie durch die materialspezifische Wasseraffinität beeinflußt wird.

Porenreiche Baustoffe, wie hydraulisch abbindende Mörtel und Betone, werden oft weiterbeschichtet oder aber in sich verfestigt und so vor Verwitterungen und mechanischen Belastungen geschützt. Die Applikation von Kunstharz-Beschichtungen auf zementgebundenen Untergründen erfordert einen tragfähigen Untergrund und eine gute Haftung. Durch den kraftschlüssigen Verbund zwischen Beschichtung und Untergrund wird die geforderte hohe mechanische Belastbarkeit der Konstruktion sichergestellt.

Da die Festigkeiten im zu beschichtenden, oberen Bereich von hydraulisch gebundenen Untergründen, im Vergleich zu den Kernfestigkeiten, oft beachtlich abfallen kann und in diesem Bereich die höchsten Beanspruchungen auftreten, sind tiefenwirksame Verfestigungen des Untergrundes erforderlich.

Zum Erhalt und zur Konservierung wurden in den letzten Jahrzehnten verschiedene Verfahren und Systeme entwickelt. Jedoch hat der trotzdem weiterschreitende Verfall vieler imprägnierter Fassaden und Skulpturen gezeigt, daß zu diesem Zweck bisher verwendete Materialien den gestellten Anforderungen nicht genügen. Silane oder Siloxanharze ergeben lediglich eine gute Hydrophobierung der Steine, aber keinen dauerhaften Schutz gegen Schadstoffe, die gasförmig oder über Kondenswasser in das Gestein gelangen. Zudem läßt die Schutzwirkung im Laufe weniger Jahre wieder nach, so daß eine dauerhafte Konservierung nicht gewähleistet ist. Kieselsäureester wirken nicht hydrophobierend. Sie ergeben zwar eine Verfestigung des mineralischen Materials jedoch mit einer Neigung zur Schalenbildung, wodurch ein vorzeitiges Abplatzen der oberen Schichten gefördert wird. Außerdem werden Sekundärporenbildungen durch das vergleichsweise große Schrumpfmaß der Behandlungsstoffe auf Kieselsäureesterbasis beobachtet. Dieses kann eine zusätzliche Wasseraufnahme begünstigen. Auch durch die Modifizierung mit Acrylaten können diese nachteiligen Begleiterscheinungen nicht wesentlich gemildert werden.

Acrylate und Methacrylate, die radikalisch gehärtet werden, haben aufgrund der schnell anspringenden Härtung eine zu geringe Eindringtiefe. Zudem besteht bei warmen Außentemperaturen die Gefahr des Abdampfens der Monomeren. Darüberhinaus sind diese Systeme feuchtigkeitsempfindlich. Feuchtigkeit im Stein stört den radikalischen Vernetzungsmechanismus und verhindert die Abhäsion des Polymeren auf dem Steinsubstrat.

Feuchtigkeitsempfindlich sind auch Polyurethansysteme, durch die in Gegenwart von Nässe Poren und Risse eines natürlichen oder künstlichen Steins, anstatt schützend ausgekleidet zu werden, mit einem Mikroschaum ausgefüllt werden. Außerdem vergilben diese stickstoffhaltigen Polymere leicht und sind biologisch unbeständig, da nitrifizierende Bakterien das Polymer leicht angreifen können. Der Zerfall des behandelten Steins wird durch die dabei gebildete Salpetersäure zusätzlich beschleunigt.

Gebräuchliche Epoxidharzsysteme, wie sie z. B. aus US-A-39 80 604 und US-A-38 50 661 bekannt sind, eignen sich, Risse in Steinen kraftschlüssig zu verkleben und somit die Festigkeit zu sanierender Steine wiederherzustellen.Auch die aus AT-A-351-996 bekannten Imprägniermittel aus Epoxidharzen und einem Addukt aus Epoxidharz und überschüssigem Amin als Härterversiegeln die behandelten Steine. Jedoch behindert diese kraftschlüssige Verklebung den natürlichen Wasseraustausch. Daher sind auch Epoxidharze, wie generell alle Stoffe, deren Wirkung im wesentlichen auf einer Verfestigung beruht, nicht zur Steinkonservierung geeignet.

Bei der Imprägnierung und Verfestigung poröser Baustoffe und Gesteine mit üblichen Epoxidharzbindemitteln ergeben sich Nachteile und technische Grenzen, die unter ungünstigen klimatischen Bedingungen oft zu unzureichenden Ergebnissen führen.

Hervorragende Endeigenschaften von Epoxidharzbindemittlen werden nur bei stöchiometrischer Mischung und bei einem hohen Aushärtungsgrad erreicht. Hohe Eindringtiefen in das mineralische Material werden nur mit niedrigviskosen Bindemitteln erreicht, die Verarbeitungszeiten und damit Eindringzeiten von mehreren Stunden aufweisen.

Wie eine intensive Untersuchung (P. Kotlik, J. Zelinger; Sb. Vyx. Sk. Chemiks technologische v. Praze 1983, 129-44) zeigt, ist es grundsätzlich möglich, mit niedermolekularen Epoxidverbindungen Steine so zu tränken, daß die Poren nicht verstopft, sondern die inneren Porenoberflächen mit einem dünnen Film ausgekleidet werden. Aber obwohl die Autoren mit einer Lösung eines niedermolekularen Epoxidharzes in einem organischen Lösungsmittel arbeiteten und, obwohl die Steine unter Vakuum imprägniert wurden, was bei der praktischen Anwendung nicht bzw. schlecht möglich ist, wurden keine zufriedenstellenden Eindringtiefen des Epoxidharzes gefunden.

Auch durch ein später entwickeltes Verfahren und Mittel zur Konservierung von Steinen durch Imprägnierung (EP-A1-0 357 886) mit härtbaren niedermolekularen Verbindungen konnte kein vollbefriedigendes Ergebnis erzielt werden. Und zwar werden hierbei die Steine mit einem Mittel behandelt, das neben anderen Zusätzen vorwiegend aliphatische Glycidylether und/oder Diglycidylehter und die zu ihrer Härtung notwendigen Härter enthält, bei denen es sich um mit den Glycidylethern mischbare, primäre, sekundäre oder tertiäre Amine, Polyamine, Polyaminoamide oder Iminoverbindungen handelt. Im Gegensatz zu den von Kotlik und Zelinger untersuchten Epoxidharzen dringt dieses Mittel tief in den Stein ein, jedoch aufgrund der hydrophilen Struktur des aminischen Härters und der lipophilen Eigenschaften der Harze können Störungen der Stöchiometrie auftreten. Die in den zu behandelnden mineralischen Materialien befindliche Kapillarfeuchte löst bevorzugt die Härterkomponente und führt dadurch zu Abweichungen der festen, vorgegebenen Harz/Härter-Stöchiometrie, besonders in den entscheidenden Grenzschichten zwischen Bindemittel und Baustoff. Durch die unterschiedliche Affinität der Bindemittel-Komponenten zum Untergrund tritt ein substratspezifisch unterschiedliches Penetrationsverhalten von Harz und Härter auf, das zur Trennung der reaktiven Komponenten im Baustoff über chromatographische Effekte führt.

Die Folgen sind teilvernetzte Bindemittel mit unzureichender Haftung am Untergrund, ungünstige mechanische Werte und erhöhte Wasserquellbarkeit. Außerdem wird die Zersetzung des so imprägnierten Materialis durch den zusätzlichen, für biologische Reaktionen zugänglichen Aminstickstoff der hinzugefügten Härter weiter beschleunigt. Die Haltbarkeit und Belastbarkeit behandelter Materialien liegt dadurch unterhalb der Erwartungen. Ablösungen von Folgebelägen treten bei mechansicher Beanspruchung (Hohlstellen) oder bei aufsteigender Feuchte (Blasenbildung) auf. Die Wirksamkeit offenporiger Verfestigungen von bewitterten Flächen nimmt ebenfalls stark ab.

Aufgabe der Erfindung ist es daher, ein Mittel und ein Verfahren zur Verfügung zu stellen, durch das mineralische Materialien, wie z. B. bewitterte Außenfassaden oder Skulpturen aus natürlichen und künstlichen Steinen, Betonflächen oder Industriefußböden unter natürlichen Bedingungen durch tiefes Imprägnieren langfristig unempfindlich gegen eindringende Feuchtigkeit gemacht werden können und gleichzeitig einen Schutz gegen physikalische, chemische und insbesondere gegen biologische Angriffe erhalten, wobei aber der natürliche Feuchteausgleich möglich bleibt. Gleichzeitig ist es Aufgabe der Erfindung, ein Mittel zur Verfügung zu stellen, das in einem einfachen Verfahren unter Vermeidung von Chromatographieeffekten tief in das mineralische Material eingebracht werden kann und anschließend am Wirkort durch eine stöchiometrische Reaktion aushärtet, das mineralische Material verfestigt, es unempfindlich gegen Bewitterung macht und für eventuelle weitere Schutzanstriche einen auf Dauer beständigen Untergrund schafft.

Die Lösung der Aufgabe erfolgt im wesentlichen durch ein Verfahren zum Imprägnieren mit Epoxidharz/Härter-Systemen, wobei Mittel verwendet werden, die Verbindungen enthalten, die sowohl Epoxidgruppen als auch aminische Gruppen mit freiem oder verkapptem reaktivem Wasserstoff enthalten und unter Einwirkung von Feuchtigkeit im mineralischen Material aushärten. Im erfindungsgemäßen Mittel können mono-, di- oder polyfunktionelle Epoxidverbindungen enthalten sein, die mit reaktiven Aminen und/oder mit reaktiven,spaltbaren Schutzgruppen verkappten Aminen umgesetzt sind. Die im Verfahren einsetzbaren Epoxidharz/Härter-Systeme können intern flexibilisiert und/oder wasseremulgierbar sein. Weiterhin können die enthaltenen Epoxidverbindungen mit Säuregruppen oder Dicarbonsäureanhydridgruppen enthaltenden Verbindungen und mit Polyolen umgesetzt sein und fluorierte Struktureinheiten oder Siloxan- bzw. Polysiloxan-Einheiten enthalten. Des weiteren kann die Lösung der Aufgabe durch ein Mittel mit folgender Zusammensetzung erfolgen:

| | |
|---|---|
| Verbindungen, die sowohl Epoxidgruppen als auch aminische Gruppen mit freiem oder verkapptem reaktivem Wasserstoff enthalten | 3 -- 100 Gew.-% |
| reaktive Haftvermittler | 0 -- 10 Gew.-% |
| Netzmittel | 0 -- 2 Gew.-% |
| Emulgator | 0 -- 10 Gew.-% |
| Stabilisator | 0 -- 5 Gew.-% |
| Härtungsbeschleuniger | 0 -- 10 Gew.-% |
| Pigment | 0 -- 7 Gew.-% |
| Füllstoffe | 0 -- 30 Gew.-% |
| Lösemittel | 0 -- 97 Gew.-% |
| Wasser | 0 -- 60 Gew.-% |

Zur Behandlung der Oberflächen mineralischer Materialien verwendete niedermolekulare Epoxidharze, werden üblicherweise direkt vor der Verwendung mit dem Härter vermischt, so daß nach dem Aufbringen Harz- und Härtermoleküle als Monomere ins Material eindringen und erst nach einer gewissen Zeit am Wirkungsort miteinander verknüpft werden. Dieses ist mit den oben beschriebenen Trenneffekten und den dadurch entstehenden Nachteilen verbunden.

Versuche haben nun gezeigt, daß aus epoxidgruppenhaltigen Verbindungen mit reaktiven funktionellen Gruppen und geeigneten Aminen Additionsverbindungen hergestellt werden können, die bei gleichem bzw. verbessertemn Eindringvermögen der bisher verwendeten Epoxidharz-Härter-Gemische nach dem Applizieren unter Einwirkung von Feuchtigkeit erst im Material aushärten.

Als epoxidgruppenhaltige Verbindungen können folgende, in fünf Gruppen einzuordnende Substanzen verwendet werden:
1. auch als Reaktivverdünner bzw. Verdünner verwendete aliphatische und aromatische Diglycidylether bzw. mono- und difunktionelle Epoxidverbindungen wie z. B. Hexandiglycidylether, Butandioldiglycidylether, Diglycidylether der C₁₃ bis C₁₅ -alkohole, Butylglycidylether, Phenoyldiglycidylether, Kresyldiglycidylether
2. mindestens difunktionelle Glycidylverbindungen mit aromatischen Strukturen wie z. B. niedermolekulare Epoxidverbindungen des Bisphenol A oder Bisphenol F, deren niedermolekulare Advancementprodukte, Epoxyverbindungen des Resorcins oder des Anilins,
3. di- oder höherfunktionelle Glycidylverbindungen mit aliphatischen Strukturen, wie z. B. niedermolekulares, hydriertes Bisphenol A-Epoxidharz, niedermolekulares, hydriertes Bisphenol F-Epoxidharz oder deren hydrierten Advancementprodukte, epoxidierte Polyether auf der Basis von Poly-THF, Polyethylenoxid, Polypropylenoxid, Polybutylenoxid oder Pentaerythritepoxidharzen,
4. niedermolekulare Glycidylverbindungen mit besonderen hydrophoben Resten, wie fluorierte Epoxidharze, epoxidierte Polysiloxane,
5. niedermolekulare Glycidylverbindungen mit end- und mittelständigen Polyetherketten und Polythioethern auf der Basis von Ethylenoxid, Propylenoxid, Butylenoxid, Tetrahydrofuran und Polysulfiden.

Insbesondere Glycidylverbindungen, die außer Epoxygruppen weitere reaktive, funktionelle Gruppen besitzen, sind zur Herstellung des erfindungsgemäßen Imprägniermittels geeignet, da sie eine zweistufige Reaktion mit dem Härter ermöglichen. Zusätzliche funktionelle Gruppen, die eine im Vergleich zu den Epoxidgruppen deutlich höhere Reaktivität aufweisen, reagieren im ersten Schritt mit dem aminischen Härter. Dabei entstehen Oligomere mit Epoxidgruppen und freien oder verkappten Aminogruppen die lagerfähig sind und erst nach der Applikation auf das mineralische Material in einem zweiten Härtungsschritt unter Einwirkung von Feuchtigkeit vernetzen und aushärten.

Glycidylverbindungen mit weiteren reaktiven, funktionellen Gruppen können aus Epoxidverbindungen der 2. und 3. Gruppe durch Umsetzung mit Kohlendioxid zu 2-Oxo-1,3-dioxolanen oder mit ethylenisch ungesättigten Carbonsäuren zu Vinylesterharzen hergestellt werden. Durch geeignete Wahl der Reaktionsbedingungen und des stöchiometrischen Verhältnisses der Reaktionspartner lassen sich diese Umsetzungen so steuern, daß jeweils nur ein Epoxidring angegriffen wird und die restlichen erhalten bleiben. Nach der Additionsreaktion dieser Verbindungen mit dem aminischen Härter werden in der ersten Stufe Oligomere mit verkappten oder freien aminischen Gruppen und Epoxidgruppen erhalten, wie über Carboaminsäurealkylester oder C-N-Bindungen verbrückt sind.

Zur Flexibilisierung der ausgehärteten Epoxidharze ist es möglich, die niedermolekularen Epoxidverbindungen vor der Additionsreaktion mit dem aminischen Härter mit Polyethern bzw. ethergruppenhaltigen Polysulfid-Oligomeren umzusetzen ohne das Eindringvermögen wesentlich zu beeinflussen. Dieses ist mit den Epoxidverbindungen aller 5 genannten Gruppen möglich. Besonders vorteilhaft sind entsprechende Reaktionen mit den Epoxidverbindungen der 2. und 3. Gruppen.

In dieser Reaktion einsetzbar sind alle Polyether mit folgender Molekülstruktur:
- HO-R^{e}-(O-R^{e})ₙ-OR^{T}: mit n = 2 bis 100
und
- R^{e}: = -CR¹R²-CR³R⁴- oder
-CR¹R²-CR¹ R²-CR¹R²-CR¹R², wobei
- R¹, R², R³, R⁴: = H
-CH₃, C₂H₅, C₃H₇, C₄H₉,
-C₅H₁₁ und
- R^{T}: ⁼ -H oder
-R¹, R², R³, R⁴ 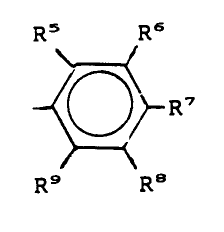
- -R₅-R₉: = R¹-R⁴
= Cl, F, Br bedeuten.

Solche Polyether mit entständigen Hydroxylgruppen werden in an sich bekannter Weise mit äquimolaren Mengen eines cyclischen Dicarbonsäureanhydrids zu einem Ester mit einer freien Carbonsäuregruppe umgesetzt. Anschließend wird diese Säuregruppe mit einer endständigen Hydroxylgruppe einer im Überschuß eingesetzten Epoxidverbindung, insbesondere derer der Gruppen 2 und 3, verestert. Auf diese Weise werden Polyether mit entständigen Epoxidgruppen erhalten. Diese Veresterungen erfolgen z. B. in Gegenwart einer Lewis-Säure, wie z. B. einem BF₃-Aminkomplex, als Katalysator.

Ethergruppenhaltige Polysulfid-Oligomere oder Polymere der allgemeinen Formel

HS-(C₂H₄-O-CH₂-O-C₂H₄-S-S)ₙ-C₂H₄-O-CH₂-O-C₂H₄-SH,

wobei n im Bereich von 3 bis 40 liegt, lassen sich in ähnlicher Weise mit den Epoxidverbindungen der 5 genannten Gruppen, aber auch mit Epichlorhydrin, verknüpfen. Die zu diesem Zweck eingesetzten Polysulfide sind hinsichtlich ihrer Molekülgröße nicht einheitlich, vielmehr ist die Größe n als statistisches Mittel zu sehen. Die handelsüblichen Produkte sind zu 0,1 bis 2 % trifunktionell. Diese Trifunktionalität bleibt auch bei den weiteren Umsetzungen erhalten, wirkt sich aber im Endprodukt nicht merkbar aus. Dieses wird daher in der angegebenen allgemeinen Formel nicht berücksichtigt.

Polysulfid-Oligomere oder -Polymere werden in an sich bekannter Weise durch Zusammenrühren der flüssigen oder in Lösung vorliegenden Reaktanden und merstündiges Erwärmen auf Temperaturen im Bereich von 40 bis 80 °C mit epoxidgruppenhaltigen, difunktionellen Verbindungen umgesetzt. Entsprechende Verbindungen sind entweder Epihalogenhydrine, bevorzugt Epichlorhydrin oder difunktionelle Epoxidverbindungen. Als solche können im Prinzip alle difunktionellen Epoxidverbindungen der genannten 5 Gruppen eingesetzt werden. Bevorzugte Epoxidverbindungen sind aliphatische oder aromatische Glycidylether oder Ester, wie z. B. Resorcindiglycidylether, Diglycidylanilin und Diglycidylether der Bisphenole, insbesondere des Bisphenol A's oder F's, aliphatischer Diole mit einer Kettenlänge von 2 bis 15 C-Atomen oder Diglycidylester der Hexahydrophthalsäure oder von aliphatischen Dicarbonsäuren mit 3 bis 13 C-Atomen.

Bei der Umsetzung der Polysulfid-Oligomere oder -Polymere mit Epihalogenhydrin wird die den Merkaptogruppen äquivalente Menge an Epihalogenhydrin eingesetzt. entsprechende Produkte sind unter dem Warenzeichen ELP® (Morton) im Handel erhältlich. Bei der Umsetzung der Polysulfid-Oligomere oder -Polymere mit difunktionellen Epoxidverbindungen werden die Mengenverhältnisse so gewählt, daß pro Merkaptogruppe zwei Epoxidgruppen eingesetzt werden. Die im ersten Reaktionschritt erhaltenen epoxidierten Polysulfide werden ohne weitere Aufarbeitung mit einer ethylensich ungesättigten Carbonsäure umgesetzt.

Auch diese Umsetzung erfolgt in an sich bekannter Weise durch Zusammenrühren der flüssigen oder in Lösung vorliegenden Reaktanden und Erwärmen des Reaktionsgemisches auf eine Temperatur im Bereich von 60 bis 90 °C für mehrere Stunden. Im allgemeinen wird die Reaktion beendet, wenn eine Säurezahl von weniger als 5 erreicht ist. Die epoxidierten Polysulfide werden mit einer dem Epoxidäquivalent entsprechenden Menge an ethylenisch ungesättigter Säure umgesetzt.

Beispiele für entsprechende ethylenisch ungesättigte Säuren sind die Acryl-, Methacryl-, Furylacryl-, Croton- und Zimtsäure.

Auf diese Weise werden Ester der folgenden allgemeinen Formel erhalten: 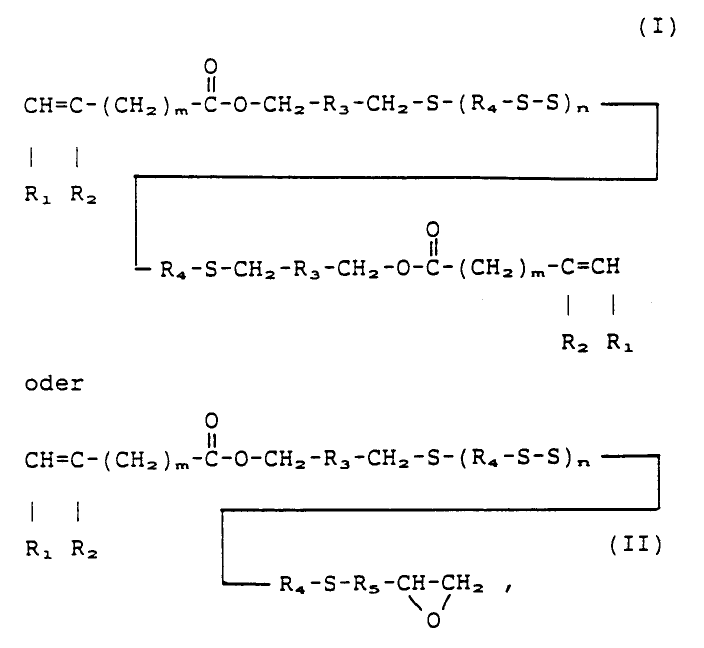 in denen
- m: = 0 oder 1
- n: = 3 bis 25
- R₁: ein Furyl- oder Phenylrest oder Wasserstoff,
- R₂: Wasserstoff oder eine Methylgruppe,
- R₃: eine Gruppe gemäß der Formeln, 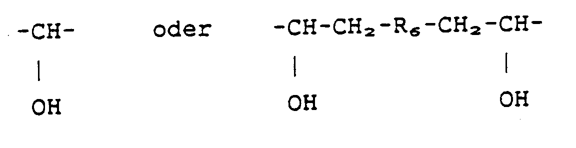
- R₄: eine Gruppe gemäß der Formel

-C₂H₄-O-CH₂-O-C₂H₄-
- R₅: eine Gruppe gemäß der Formeln
-CH₂- oder 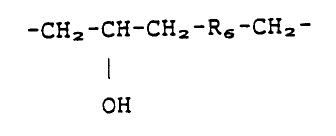
- R₆: eine Gruppe gemäß der Formeln 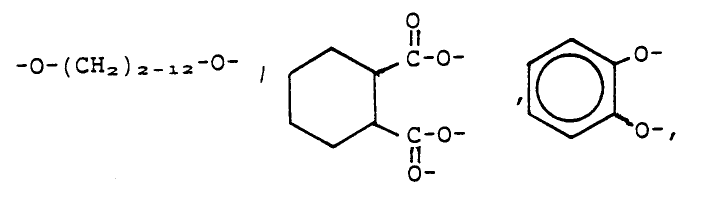 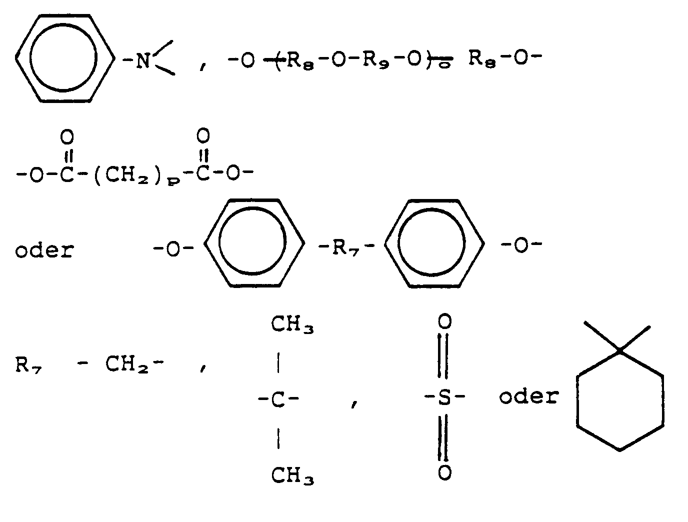
- o: = 1 bis 20
- p: = 1 bis 10
- und R₈ und R₉: gleich oder verschieden sind und eine Ethylen- oder Propylen-Gruppe bedeuten.

Analog lassen sich Additionsverbindungen aus aminterminierten Polyethern und überschüssigen Epoxidharzen der 1. bis 3. Gruppe durch eine einfache Umsetzung bei 20 bis 80 °C herstellen.

Als Amine können hierzu Verbindungen folgender Strukturformeln verwendet werden:
H₂N-CR-H-CR H(-O-CRH-CRH-)ₙ O-R
mit n = 2 bis 50,
oder
H₂N-CR-H-CR H(-O-CR-H-CR H-)ₙ-NH₂
mit n = 2 bis 100,
oder
H₂N-(CHR-CHR-CHR-CHR-O)ₙ-CHR-CHR-CHR-CHR-NH₂
mit n = 2 bis 50, wobei R = H oder -(CH₂)ₘ-CH₃
mit m = 0 bis 4 bedeuten.

In gleicher Weise wie diese beschriebenen Flexibilisatoren lassen sich Emulgatoren mit enständigen Säureguppen, wie z. B. Sulfon- oder Phosphorsäuregruppen mit dem zu verwendenden Epoxidverbindungen verestern.

Je nach Wahl des Polyethers, des Anhydrids und der Epoxidverbindungen werden Harze mit unterschiedlichen Eigenschaften erhalten. So wird dadurch beispielsweise das Emulgierverhalten, die Flexibilisierung aber auch die Fähigkeit, in das zu behandelnde mineralische Material einzudringen und eventuell zu weitern Schutzanstrichen Haftbrücken zu bilden, beeinflußt.

Zur Herstellung des Imprägniermittels werden die Epoxidverbindungen bzw.
Epoxid-Polyether-Additionsverbindungen unter milden Reaktionsbedingungen mit als Härter fungierenden Aminen umgesetzt. Diese Amine lassen sich in zwei Gruppen teilen:
I. aliphatische und aromatische Polyamine, wie z. B. 2,2,4-Trimethyl-1,6-Hexandiamin (TMD), Bis-(3-methyl-4-aminocyclohexyl-)methan (Härter SL), Metaxylilendiamin, Methylendianilin, Cyclohexyldiamin u. a., ferner Addukthärter, Mannichbasen, Schiff'sche Basen der bekannten Amine, hochmolekulare Polyetheramine und Polyetherurethanharnstoffamine.
II. Teilverkappte aminische Härter mit mindestens einem reaktiven Amin-Wasserstoff und mindestebs einer reversibel spaltbaren Schutzgruppe, wie z. B. Teilketimine von N-Ethylaminopiperazin, Diethylentriamin, Isophorondiamin, TMD, Härter SL, Cyclohexyldiamin, Metaxylilendiamin, Bis(4-aminocyclohexyl)methan,Methylpentandiamin und Methylendianilin.

Nach der Umsetzungsreaktion werden die erhaltenen Produkte je nach Verwendung mit unterschiedlichen Verdünnern und Additiven versetzt. Dieses können Lösemittel, Haftvermittler, Modifizierungsmittel, Weichmacher, Benetzungsadditive, Pigmente und Füllstoffe mit besonders feiner Körnung und Härtungsbeschleuniger sein.

Den hinzugefügten Lösemitteln kommt dabei eine besondere Aufgabe zu. Einerseits verbessern sie das Eindringvermögen des Imprägniermittels in den Stein. Andererseits beeinflussen die Lösemittel während der Aushärtung der Harze im Stein die Porosität der Imprägnierung, so daß die Atmungsaktivität der behandelten Oberflächen erhalten bleibt.

Als Lösemittel können aromatische und aliphatische Kohlenwasserstoffe, Ester, Ketone, Äther verwendet werden. Beispiele solcher Lösemittel sind Xylol, Testbenzin, Methoxypropylacetat, Methylisobutylketon, Methylethylketon, Propylenglykolmonomethylether. Wasser kann direkt vor der Anwendung sowohl als Lösemittel als auch als Emulgiermittel hinzugefügt werden. Emulsionen können unter Verwendung von geeigneten Polyolen wie Polyethylenglykolen und Polypropylenglykolen hergestellt werden. Als Haftvermittler, bzw. Benetzungsadditive sind insbesondere Aminosilane und Epoxisilane einsetzbar. Geeignete Benetzungsadditive sind reaktive Siloxan/Silangemische (ByK® A 500, ByK® A 501, ByK® A 520, ByK® A 525), Ammionium- und Borverbindungen, fluorierte Tenside, Si-organische Verbindungen, insbesondere Silikonöle.

Weiterhin können organische und anorganische feinkörnige Pigmente und Füllstoffe jeweils in einer Menge von 1 bis 2 Gew.-% bezogen auf die Gesamtmischung zur Farbaufbesserung hinzugefügt werden. Als Härtungsbeschleuniger können Benzylalkohol, Phenol und andere aromatische Alkohole, Salicylsäure, Imidazole und andere für diesen Zweck einsetzbare Verbindungen in einer Menge von 0,1 bis 10 Gew.-%, bezogen auf die Gesamtmenge hinzugefügt werden.

Werden Epoxidverbindungen der Gruppen 1 bis 5 direkt zur Herstellung der Imprägniermittel verwendet, so werden sie bevorzugt mit den teilverkappten Härtern (II) vermischt. Dabei ist entscheidend, daß die Epoxidverbindungen und der Härter im stöchiometrischen Verhältnis 1:1 bezogen auf die verfügbaren Epoxidringe der Epoxidverbindungen und den aktiven Wasserstoff des aminischen Härters eingesetzt werden. Im ersten Reaktionsschritt entstehen dadurch bei einer Temperatur von 20 bis 80 °C niedermolekulare Oligomere durch chemische Verbrückung von Epoxidverbindung und Härter.

Es wird auf diese Weise ein niedrigviskoses, reaktives, einkomponentiges Mittel erhalten, das direkt auf das zu behandelnde mineralische Material appliziert werden kann und nach dem Eindringen unter Einwirkung von Wasser in einem zweiten Reaktionsschritt aushärtet.

Durch den Zusatz oben genannter Lösemittel, Zusätze und Additive lassen sich die Eigenschaften dieses Imprägniermittels je nach Verwendung variieren. Werden Pigmente und Füllstoffe in pastöser Form und Tixotropiermittel hinzugefügt können daraus gemeinsam mit weiteren Additiven Gemische hergestellt werden, die den Untergrund durch das Eindringen der teilreagierten Epoxidverbindungen verfestigen und gleichzeitig eine schützende Beschichtung auf der Oberfläche bilden.

Durch Reaktion mit Polyethern bzw. mit ethergruppenhaltigen Polysulfid-Oligomeren flexibilisierte Epoxidverbindungen lassen sich mit den Härtern I und/oder II derart kombinieren, daß die zusätzlichen reaktiven, funktionellen Gruppen in einer ersten Stufe mit einem Teil der reaktiven aminischen Wasserstoffe reagieren und so Oligomere aus den Epoxidverbindungen und den Härtern gebildet werden. Diese Oligomere, die sowohl zur einfachen Imprägnierung als auch gemeinsam mit weitern Zusätzen zur imprägnierenden Beschichtung verwendet werden können, weisen die für die in der 2. Stufe (nach der Applikation) ablaufende Amin/Epoxid-Vernetzungsreaktion nötigen funktionellen Gruppen (teilweise oder gänzlich verkappt) in der entsprechenden Stöchiometrie auf. Werden zu ihrer Herstellung nicht verkappte Amine verwendet, so ist die Auswahl so zu treffen, daß der 2. Härtungsschritt, die Amin/Epoxidharz-Reaktion, eine ausreichende Verarbeitung und Eindringzeit ermöglicht. Dabei werden die langsamen, bzw. mittelraktiven Amine, wie z. B. Isophorondiamin, Bis(4-aminocyclohexyl)methan, Bis(3-methyl-4-aminocyclohexyl)methan, Methylendianilin bevorzugt.

Da diese intern flexibilisierten Imprägniermittel vorzugsweise in Lösung bzw. Emulsion verwendet werden, kann eine Härtungsverzögerung aber auch durch stärkere Verdünnung mit einem Lösemittel, bzw. Emulgiermittel erreicht werden. Flexibilisierte und nicht flexibilisierte Oligomere können unter Berücksichtigung der Stöchiometrie der vernetzbaren reaktiven Gruppen im Gemisch verwendet werden.

Die im ersten Härtungsschritt resultierenden multifunktionellen Oligomere weisen zwangsläufig einheitlich die gleichen Löslichkeiten und Penetrationseigenschaften für die jeweils gemeinsam in den entstandenen Molekülen enthaltenen vernetzungsfähigen "epoxidischen" und "aminischen" Teile auf, so daß nach der Applikation eine "chromatographische" Trennung oder das Herauslösen der aminischen Komponente durch Lösemittel ausgeschlossen ist.

Ein weiterer Vorteil dieser neuen Imprägniermittel ist, daß damit ein einkomponentiges, lagerfähiges Mittel zur Verfügung gestellt wird, bei dem das aufwendige stöchiometrische Vermischen der Harz- und Härterkomponente vor der Anwendung auf der Baustelle entfällt.

Außerdem können Epoxidverbindungen und Härter verwendet werden, die bei zweikomponentiger Anwendung unverträglich wären, da sie sich z. B. entmischen würden. Dadurch eröffnet sich der Einsatz stark hydrophober Harze, die im Endpunkt besonders wasserfest sind.

Diese verbesserte Verarbeitbarkeit ist zudem noch mit einer größeren Variabilität der Endeigenschaften der ausgehärteten Produkte verknüpft.

Als besonders vorteilhaft hat sich bei der Verwendung dieser Imprägniermittel die Unempfindlichkeit gegen im Stein vorhandene Feuchtigkeit erwiesen. Aber auch im ausgehärteten Zustand zeigen sich imprägnierte mineralische Materialien besonders resistent gegen einwirkende Feuchtigkeit.

| ROHSTOFFE | | | |
|---|---|---|---|
| Abkürzung | genaue Bezeichnung | Viskosität (25 °C) [mPa⁻s] | Epoxidzahl [%] |
| 0161 | Rütapox® 0161: Bisphenol F-Epoxidharz | 4 500 | 24,7 |
| 0162 | Rütapox® 0162: Bisphenol A-Epoxidharz | 4 500 | 24,7 |
| VE 4102-R | Rütapox® VE 4102-R: hydr. Bisphenol F-Epoxidharz | 390 | 23,2 |
| VE 4101-R | Rütapox® VE 4102-R: hydr. Bisphenol A-Epoxidharz | 1 385 | 23,1 |
| VE 3650 | Rütapox® VE 3650: N,N-Diglydicyl-Anilin | 150 | 37,4 |
| Verdünner R | Rütapox® Verd. R: Resorcin-diglycidylether | 300 | 36,0 |
| 0191x75 | Rütapox® 019LX75: Epoxid-Festharz auf Basis Bisphenol A 75 %g in Xylol | 6 500 | 6,8 |
| VE 4164-R | Rütapox® VE 4164-R: hydr. 0191 | (360 -120 °C | 6,6 |
| Verdünner S | Rütapox® Verd. S: 1,6-Hexan-diglycidlether | 12 | 32,8 |
| LP-3 | Polysulfid-Polymer | 10 | |
| ELP-3 | epoxidiertes Polysulfid, | | 3,3 |
| Flex. WF | Rütapox® Flexibilisator WF: epox. Polyalkylenoxid | 540 | 10,3 |
| 0191 | Rütapox® 0191: festes Epoxidharz auf Bisphenol A-Basis | fest | 9,0 |
| PM | Propylenglykolmonomethylether | | ---- |
| MEK | Methyl-Ethyl-Keton | | ---- |
| 0158 | Rütapox® 0158: Bisphenol F-Epoxidharz | 1 200 | 26,4 |
| Epoxisilan A-187 | Gamma-Glycidoxypropyltrimethoxy-Silan | | 18,2 |
| 0164 | Rütapox® 0164: Bisphenol A-Epoxidharz | 10 000 | 22,8 |
| | Plastorit 000: SiO₂ | | |
| | Rütapox® DMP 30: Tris(dimethylaminomethyl)phenol-Epoxidharz | | |

| Abkürzung | genaue Bezeichnungen | Viskosität (25 °C) [mPa⁻s] | Aminäquivalent |
|---|---|---|---|
| MPDA | 2-Methyl-1,5-diaminopentan | 10 | 29,0 |
| IPD | Isophorondiamin | 13 | 42,5 |
| Härter N | N-Ethylaminopiperazin | 15 | 43,0 |
| IPD-AN | cyanethyliertes IPD | 100 | 75,0 |
| TMD | 3,3',5-Trimethylhexan-1,6-diamin | 10 | 40,0 |
| TMD-AN | cyanethyliertes TMD | 30 | 70,0 |
| BDMA | Benzyldimethylamin | | |
| MIBK | Methylisobautylketon | | |
| hydr. | hydriert | | |

### Teilketimine

### Beispiel 1

In einem temperierbaren 1 l-Dreihalskolben, ausgestattet mit einem Flügelrührer, Thermometer und einem Wasserabscheider mit Kühler, werden 474 g TMD mit 331 g MIBK und 3,5 g p-Toluolsulfonsäure auf 115 °C erwärmt. Der für die Ketiminbildung verwendete Wasserabscheider wird zusätzlich mit MIBK gefüllt. Unter Rühren wird innerhalb von 5 h 54 g Wasser abgeschieden. Dabei steigt die Siedetemperatur kontinuierlich bis auf 135 °C an. Der Reaktionsverlauf wird über die abgeschiedene Wassermenge bestimmt. Zur Kontrolle wird das wäßrige Kondensat gewichtsmäßig erfaßt und der Anteil an gelöstem Keton (GC-Messung) abgezogen. Anschließend wird der Wasserabscheider entfernt und die flüchtigen Stoffe bei 80 °C 1 min am Wasserstrahlvakuum abgezogen. Das entstandene niedrigviskose Halbketimin (720,3 g Ausbeute) hat ein Gesamtaminäquivalent von 61 g/Äquivalent.

### Beispiel 2

Analog zu Beispiel 1 werden 476 g m-Xylilendiamin mit 386 g MIBK und 4,3 g p-Toluolsulfonsäure umgesetzt. Dabei werden 63 g Wasser abgeschieden. Das niedrigviskose Teilketimin (774,6 g Ausbeute) hat ein Gesamtäquivalent von 55 g/Äquivalent.

### Beispiel 3

Analog zu Beispiel 1 werden 530 g Methylen-bis(4,4'cyclohexylamin) mit 275,4 g MIBK und 4,0 g p-Toluolsulfonsäure umgesetzt. Innerhalb der Reaktionszeit von 7 h werden 45 g Wasser abgeschieden. Das niedrigviskose Teilketimin (732,2 g Ausbeute) hat ein Gesamtäquivalent von 73 g/Äquivalent.

### Flexible Epoxidharze

### Beispiel 4

In einem temperierbaren 4 l-Dreihalskolben, ausgestattet mit einem Thermometer, Flügelrührer und einem Tropftrichter, werden 688 g Rütapox® 0161, 0,4 g BDMA und 1 688,4 g Lösemittel PM vorgelegt. Bei 80 °C werden innerhalb von 2 h unter Rühren 1 000 g LP-3 zugetropft. Die Nachreaktion beträgt weitere 3 h bei 80 °C. Die Reaktion wird bei einer Restepoxidzahl von 2,5 % beendet. Das Produkt (3 368 g Ausbeute) ist eine klare Flüssigkeit mit einer Viskosität (25 °C) von 125 mPa·s.

### Beispiel 5

Analog zu Beispiel 4 werden 478 g Rütapox® Verdünner R, 0,4 g BDMA und 1 478 g PM mit 1 000 g LP-3 umgesetzt. Das Produkt (2 946 g Ausbeute) weist eine Epoxidzahl von 2,8 % und eine Viskosität (25 °C) von 75 mPa·s auf.

### Beispiel 6

Analog zu Beispiel 4 werden 478 g Rütapox® Verdünner R, 0,4 g BDMA mit 1 000 g LP-3 umgesetzt. Das Produkt (1 469 g Ausbeute) weist eine Epoxidzahl von 6,5 % und eine Viskosität (25 °C) von 55 000 mPa·s auf.

### Beispiel 7

Analog zu Beispiel 4 werden 676 g Rütapox® 0161, 0,4 g BDMA und 560 g Xylol mit 1 000 g LP-3 umgesetzt. Das Produkt (2 228 g Ausbeute) weist eine Epoxidzahl von 4,0 % und eine Viskosität (25 °C) von 1 100 mPa·s auf.

### Flexible Epoxidharze, Vinylteilester

### Beispiel 8

In einem temperierbaren 2 l-Dreihalskolben, ausgerüstet mit Thermometer, Flügelrührer, Rückflußkühler und Tropftrichter, werden 1 075 g epoxidiertes Polysulfid aus Beispiel 7 1,5 g BDMA und 12,5 g Xylol auf 80 °C erwärmt. Innerhalb von 2 h werden unter Rühren 36,7 g Acrylsäure zugetropft. Die Nachreaktion erfolgt bei 80 °C innerhalb von 18 h. Der Vinylteilester (1 218 g Ausbeute, klare Flüssigkeit) weist eine Restepoxidzahl von 2,05 %, eine Säurezahl von 3,7 mg KOH/g und eine Viskosität (25 °C) von 2 000 mPa·s (25 °C) auf.

### Beispiel 9

Analog zu Beispiel 8 werden 1 075 g epoxidiertes Polysulfid aus Beispiel 7, 1 g BDMA und 15 g Xylol und 43,9 g Methacrylsäure umgesetzt. Die Nachreaktion erfolgt bei 80 °C innerhalb von 18 h. Der Methacrylsäureteilester (1 127 g Ausbeute, klare Flüssigkeit) weist eine Epoxidzahl von 1,97 %, eine Säurezahl von 0,1 mg KOH/g und eine Viskosität (25 °C) von 2 100 mPa·s auf.

### Beispiel 10

Analog zu Beispiel 8 werden 662,5 g epoxidiertes Polysulfid aus Beispiel 6, 1 g BDMA und 233,7 g Xylol und 36,7 g Acrylsäure umgesetzt. Die Nachreaktion erfolgt bei 80 °C innerhalb von 18 h. Der Vinylester (925 g Ausbeute, klare Flüssigkeit) weist eine Epoxidzahl von 1,86 %, eine Säurezahl von 0,1 mg KOH/g und eine Viskosität (25 °C) von 1 100 mPa·s auf.

### Flexible Epoxidharze, Polyether

### Beispiel 11

In einem temperierbaren 2 l-Dreihalskolben, ausgestattet mit einem Thermometer, Flügelrührer und einem Rückflußkühler werden 600 g Polyethylenglykol 600 (Molmasse 600 g) mit 120 g Bernsteinsäureanhydrid und 0,2 g BDMA unter Rühren auf 150 °C erwärmt. Nach 6 h Reaktionsdauer sinkt die Säurezahl auf 84 mg KOH/g. Anschließend werden bei 120 °C 371 g Rütapox® 0161 und 0,3 g BDMA zugemischt. Die Umsetzung wird nach 3 h bei einer Säurezahl von 0,5 mg KOH/g und einer Epoxidzahl von 4,0 % beendet. Die klare Flüssigkeit (1 085 g Ausbeute) weist eine Viskosität (25 °C) von 1 050 mPa·s auf.

### Beispiel 12

Analog zu Beispiel 11 werden 1 000 g Polyethylenglykol 2 000 (Molmasse 2 000 g) mit 120 g Bernsteinsäureanhydrid und 0,3 g BDMA bis zu einer Säurezahl von 62,5 mg KOH/g (Reaktionsdauer 8 h) umgesetzt. Anschließend werden bei 120 °C 299 g Rütapox® Verdünner R und 0,35 g Katalysator zugegeben und bis zu einer Säurezahl von 0,46 mg KOH/g und einer Epoxidzahl von 4,2 % (Reaktionsdauer 3 h) umgesetzt.

Das flexibilisierte Epoxidharz ( 1 411 g Ausbeute) weist eine Viskosität (25 °C) von 1 600 mPa·s auf.

### Carbonate

### Beispiel 13

In einem temperierbaren 2 l-Dreihalskolben, ausgerüstet mit einem Thermometer, Flügelrührer und Gaseinleitungsrohr werden 1 000 g Rütapox® 0164 mit 25 g Ethyltriphenylphosphoniumbromid (Katalysator) auf 120 °C erwärmt. Anschließend wird kontinuierlich unter Rühren Kohlendioxid durchgeleitet. Zur Kontrolle der Strömungsgeschwindigkeit und zur Erhöhung der Löslichkeit von CO₂ im Reaktionsgemisch wird das überschüssige Gas über eine mit Paraffinöl gefüllte Waschflasche ausgeleitet. Die Reaktion wird nach 7 h bei einer Restepoxidzahl von 11,5 % beendet. Das Teilcarbonat (1 135 g Ausbeute, feste plastische Masse) weist ein Gesamtäquivalent von 133 g/Äquivalent auf.

### Beispiel 14

Analog zu Beispiel 13 werden 1 000 g Rütapox® 0161 mit 25 g Katalysator innerhalb von 6 h mit Kohlendioxid umgesetzt. Das entstehende Teilcarbonat (1 098 g Ausbeute, zähflüssiges Produkt) weist eine Restepoxidzahl von 16,3 % und ein Gesamtäquivalent von 144 g/Äquivalent auf.

### Beispiel 15

Analog zu Beispiel 13 werden 1 000 Rütapox® Verdünner R mit 25 g Katalysator und überschüssigem Kohlendioxid umgesetzt. Das zähflüssige Produkt (1 282 g Ausbeute) weist eine Restepoxidzahl von 16,4 % und ein Gesamtäquivalent von 94 g/Äquivalent auf.

### Epoxidharzvinylester

### Beispiel 16 bis 23

In einem temperierbaren 2 l-Dreihalskolben, ausgestattet mit einem Thermometer, Flügelrührer, offenen Rückflußkühler und Tropftrichter, wird das Epoxidharz vorgelegt, mit Lösemittel verdünnt (Beispiele 20 bis 23) und mit dem Katalysator versetzt. Unter Rühren wird innerhalb von 2,5 h die ungesättigte Säure bei 80 °C zugetropft. Die Reaktionszeiten und Säure- und Epoxidzahlen der Produkte sind in Tabelle 1 zusammengefaßt. Die Teilester (100 % Ausbeute, klare Flüssigkeit) werden bis zur Umsetzung mit Aminen bei 5 °C gelagert.

Die Beispiele 16 bis 23 sind in der Tabelle 1 zusammengefaßt.

**Tabelle 1**

| Bsp. | Epoxidh. Rütapox® [g] | Lösemittel [g] | Katalysator [g] | Säure [g] | Reakt.-zeit [h] | Epoxidzahl [%] | Säurezahl [mg KOH/g] | Äquivalent [g/Äquiv.] |
|---|---|---|---|---|---|---|---|---|
| 16 | Verd. R 1 000 | --- | BTMAC 22 | AS 302 | 40 | 12,3 | 0,23 | 155 |
| 17 | 0161 1 000 | --- | BTMAC 16 | AS 207 | 23 | 9,7 | 0,15 | 210 |
| 18 | VE 4102-R 1 000 | --- | BTMAC 16 | AS 191 | 44 | 7,8 | 0,15 | 224 |
| 19 | 0164 1 000 | --- | BTMAC 14 | AS 192 | 25 | 9,2 | 0,11 | 224 |
| 20 | 0191 750 | Xylol 270 | BTMAC 4 | AS 59,5 | 30 | 3,1 | 0,20 | 656 |
| 21 | 0191 750 | Xylol 274 | BTMAC 4 | MAS 71 | 52 | 3,1 | 0,30 | 666 |
| 22 | VE 4164-R 750 | Xylol 265 | BTMAC 2,8 | AS 41,8 | 54 | 2,3 | 2,7 | 913 |
| 23 | VE 41 64-R 750 | Xylol 268 | BTMAC 2,8 | MAS 50 | 93 | 2,1 | 2,4 | 922 |
| BTMAC Benzyltrimethylammoniumchlorid AS Acrylsäure MAS Methacrylsäure | | | | | | | | |

### Einkomponentige Epoxidharzbindemittel

Für die offenporige Verfestigung pastöser Baustoffe, sowie für Schutzanstriche, Imprägnierungen und Grundierungen können folgende erfindungsgemäße Bindemittel Verwendung finden:

### Beispiel 24

In einem temperierbaren 500 ml-Dreihalskolben, ausgerüstet mit einem Thermometer, Flügelrührer und Rückflußkühler, werden 93,1 g Rütapox® 0158 (Epoxidharzkomponente) mit 37,7 g Ketimin (Aminkomponente) 40 min bei 40 °C unter Rühren erwärmt. Das resultierende einkomponentige Epoxidharzbindemittel weist eine Viskosität (25 °C) von 8 mPa·s und einen Brechungsindex (25 °C) von 1,4410 auf. die Verarbeitungszeit beträgt bei 21 °C mindestens 12 h. Die Aushärtung des Bindemittels erfolgt im dünnen Film unter Einfluß der Luft- und Untergrundfeuchtigkeit.

### Beispiele 25 bis 41

werden analog zu Beispiel 24 hergestellt. Die Edukte, die Reaktionsparameter sowie die Produktdaten sind in Tabelle 2 zusammengestellt.

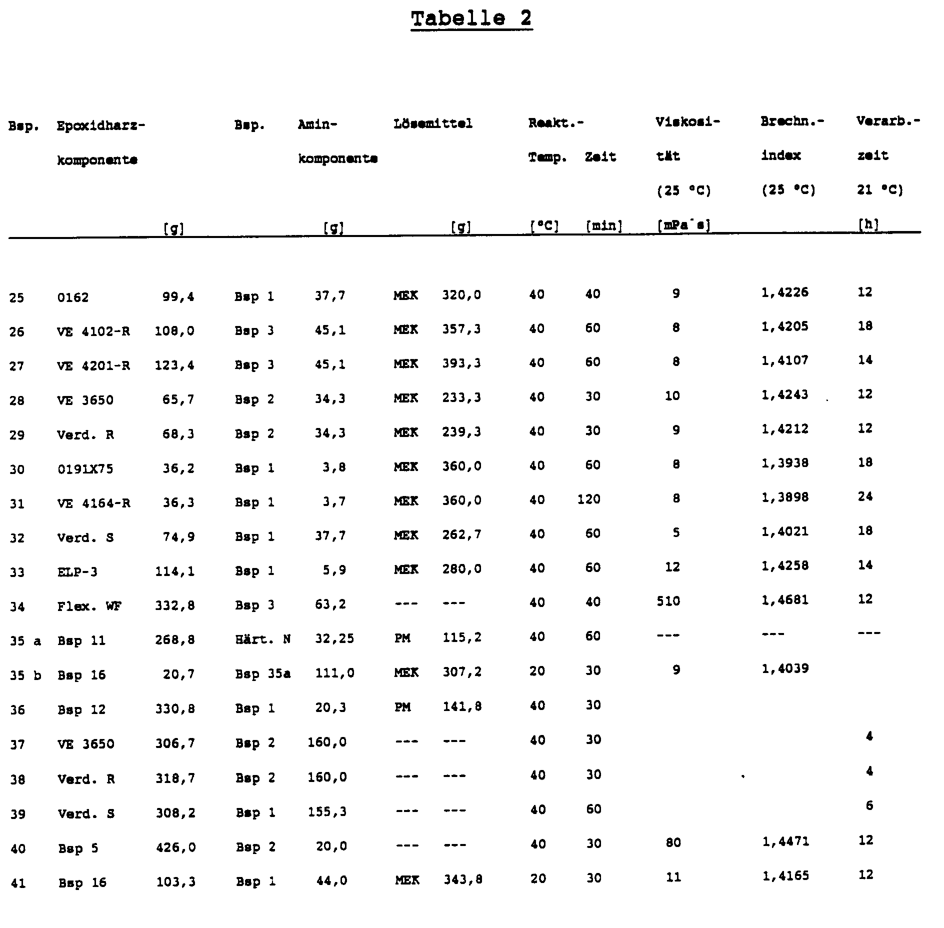

### Beispiel 42

In einem temperierbaren 500 ml-Dreihalskolben, ausgerüstet mit einem Thermometer, Flügelrührer und Rückflußkühler, werden 105 g des funktionalisierten Epoxidharzes aus Beispiel 17 mit 14,5 g aminischem Härter MPDA und 40 g Lösemittel Methylethylketon 30 min bei 25 °C umgesetzt. Anschließend wird die Reaktionsmischung mit 238,7 g Lösemittel Methylethylketon weiter verdünnt. Das verdünnte einkomponentige Epoxidharzbindemittel weist eine Viskosität (25 °C) von 1,4395 auf. Die Verarbeitungszeit beträgt bei 21 °C mindestens 4 h.

### Beispiele 43 bis 53

werden analog zu Beispiel 42 hergestellt. Die Edukte, die Lösemittel, Reaktionsparameter, sowie die Produktdaten sind in Tabelle 3 zusammengestellt.

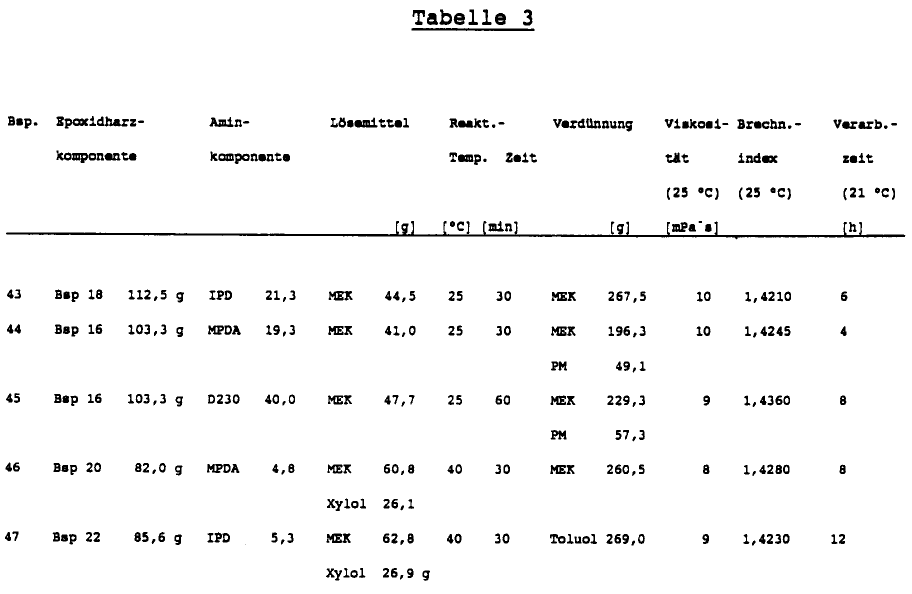

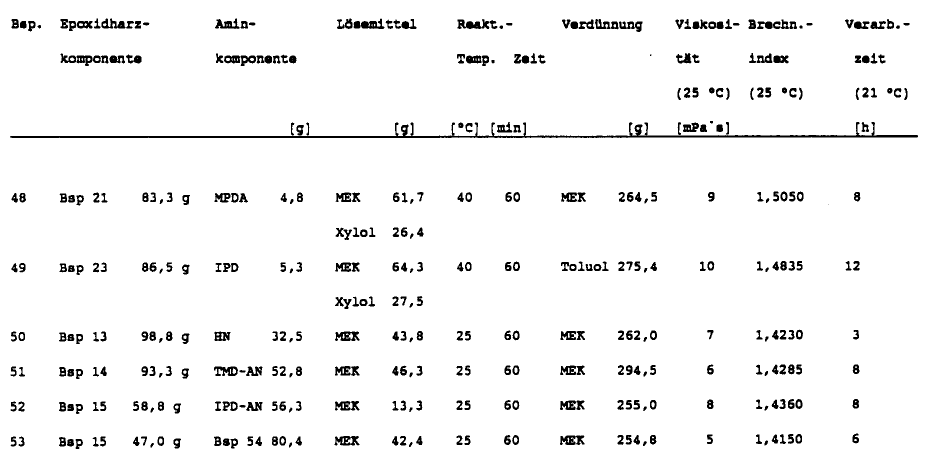

### Beispiel 54

In einem temperierbaren 500 ml-Dreihalskolben, ausgestattet mit Thermometer, Flügelrührer, Tropftrichter und Rückflußkühler, werden 158 g TMD vorgelegt und 236,4 g Epoxisilan A187 bei 60 °C innerhalb 3 h zugetropft. Die Nachreaktion beträgt 2 h bei 80 °C. Das silanmodifizierte Amin ( 393 g Ausbeute, klare Flüssigkeit) weist eine Viskosität von 980 mPa·s (25 °C), einen Brechungsindex von 1,4661 (25 °C) und ein Aminäquivalent von 134 g/Äquivalent auf.

### Beispiel 55

Zur Beurteilung der Imprägnierwirkung der erfindungsgemäßen Bindemittel wurden das Eindringverhalten und die hydrophobierende Wirkung am Ebenheider Schilfsandstein erprobt. Dazu wird ein 50 x 50 x 100 mm Steinquader an den vier langen Seitenflächen mit chemikalienbeständigen Epoxidharzen transparent und flüssigkeitsdicht beschichtet und mit der offenen Stirnfläche 10 mm tief in die Imprägnierlösung aus Beispiel 31 eingetaucht. Im Steinquader steigt die Imprägnierlösung über die Dauer von 5 h hoch. Zur Verminderung des Lösemittelverlustes wird die Tränkung in einer dichten Glaskammer für Dünnschichtchromatographie durchgeführt. Der so getränkte Stein wird weitere 7 Tage an der Luft gelagert, in Längsrichtung gespalten und auf seine wasserabweisenden Eigenschaften durch Wassertropfenbelastung geprüft. Die Eindringtiefe der optisch sichtbaren Lösemittelfront beträgt nach 5 h 28 mm. Die offenporige Verfestigung wirkt noch 7 Tage gleichmäßig stark hydrophobierend über eine Eindringtiefe von 18 mm. Ferner wurden auf einer Polyethylenplatte durch mehrfache Anstriche 1 mm Bindemittelfilme aufgetragen, die nach einer Härtungszeit von 7 Tagen bei Raumtemperatur auf ihre Quellbarkeit (Medienlagerung 1 bis 8 Tage bei Raumtemperatur) in Wasser und 5 %ige Schwefelsäure geprüft wurden. Die Wasseraufnahme beträgt 0,8 %, bzw. 0,9 % und die Säureaufnahme 1,0 %, bzw. 1,2 %.

### Beispiele 56 bis 68

Analog zu Beispiel 55 werden weitere erfindungsgemäße Bindemittel untersucht. Die Ergebnisse sind in Tabelle 4 zusammengefaßt.

### Beispiel 69 und 70

Als Vergleich wurden zweikomponentige Epoxidharzbindemittel zur Sandsteinimprägnierung eingesetzt. Vergleicht man die Ergebnisse in Tabelle 4, werden die entscheidenden Vorteile der erfindungsgemäßen Bindemittel deutlich. Bei Beispiel 70 erweist sich die chromatographische Trennung der reaktiven Komponenten als Nachteil. Dadurch weicht die Stöchiometrie des Bindemittels über die gesamt Eindringtiefe ab. Dadurch sinken die mechanischen und chemischen Festigkeiten, die bei optimaler Aushärtung im Film die Anforderungen voll erfüllen. Ein Tränkungsversuch mit den Einzelkomponenten zeigt, daß die Harzlösung bei 80 mm und die Härterlösung bis 30 mm eindringt. Auf Beispiel 70 übertragen, bedeutet das, daß der gesamte Härter auf die erste Hälfte der Eindringtiefe verteilt wird und die zweite Hälfte der Eindringtiefe ausschließlich mit Harz getränkt wird. Die dadurch bedingten Gradienten der mechanischen und chemischen Beständigkeiten sowie die unterschiedliche Wasserquellbarkeit führen erfahrungsgemäß zu Schalenablösungen des verfestigen Sandsteins und damit zu seiner Zerstörung bei freier Bewitterung im mitteleuropäischen Klima.

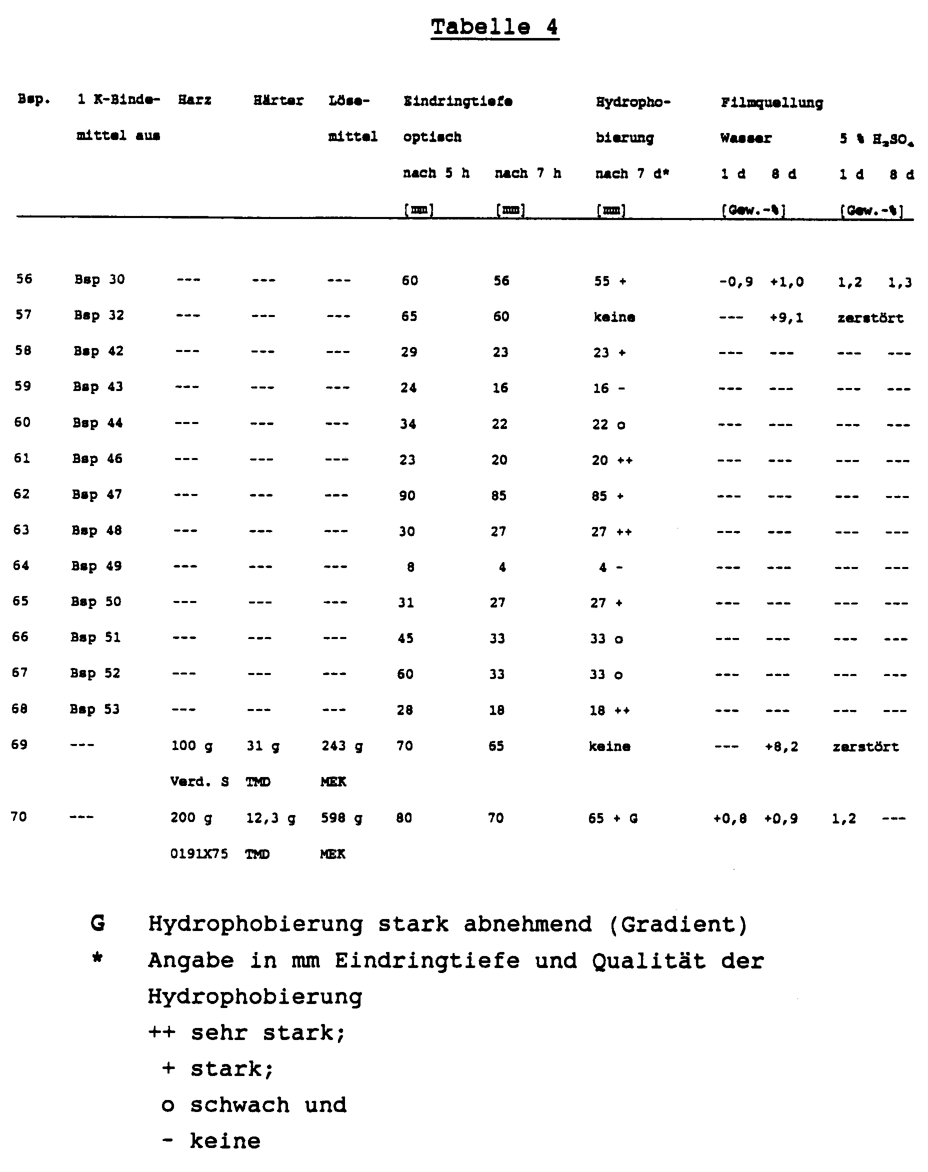

### Beispiel 71 bis 73

Auf eine gesandstrahlte, wassergesättigte Gehwegplatte werden die Bindemittel aus Beispiel 37, 38 und 39 einschichtig (ca. 150 g/m²) mit einem Pinsel aufgetragen und nach 4 h bei Raumtemperatur mit Quarzsand 0,3 bis 0,7 mm abgesandet. Die Haftungsfestigkeit der Anstriche (Schenk-Trebel-Gerät mit Stempel 20 cm²) beträgt nach 72 h 3,1 N/mm² (Abriß Grundierung), 3,5 N/mm² (Bruch im Untergrund) und 0,4 N/mm² (Abriß Grundierung).

Werden in Vergleichsversuchen die 2 K-Bindemittel VE 3650 + m-Xylilendiamin, Verdünner R + m-Xylilendiamin, Verdünner S + TMD oder aber reaktivere Addukthärter auf IPD-Basis verwendet, liegen die Haftungswerte zwischen 0,2 und 0,9 N/mm² und damit deutlich unterhalb der für Beschichtungen geforderten Mindestwerte von 1,5 N/mm². Die Beschleunigung der Bindemittel aus Beispiel 37 und 38 steigert die Haftung nochmals.

### Beispiel 74

Zur wasserdichten Grundierung oder Versiegelung feuchter, poröser Baustoffe wurde folgende Formulierung auf eine nasse Gehwegplatte analog zu Beispiel 71 aufgetragen (ca. 250 g/m²) und nach 4 h abgesandet. Die Haftungsfestigkeit liegt nach 72 h oberhalb von 4,3 N/mm² (Bruch im Untergrund):

| | |
|---|---|
| 1 K-Bindemittel Beispiel 37 | 25,0 MT |
| Plastorit 000 | 9,9 MT Goller/Duisb. |
| Zirkonmehl AMC-Mesh 200 | 23,7 MT Frank+Schulte/Essen |
| Zirkonsand Bar-WTN | 31,1 MT Frank-Schulte/Essen |
| Rütapox® DMP30 (Beschleuniger) | 4,0 MT Bakelite/Duisb. |
| Benzylalkohol | 2,0 MT |
| Nonylphenol | 4,0 MT |

## Patentansprüche

1. Verfahren zum Imprägnieren von mineralischen Materialien mit Epoxidharz/Härter-Systemen, **dadurch gekennzeichnet**, daß zum Imprägnieren Mittel verwendet werden, die Verbindungen enthalten, die sowohl Epoxidgruppen als auch aminische Gruppen mit freiem oder verkapptem reaktivem Wasserstoff enthalten.

2. Verfahren nach Anspruch 1, **dadurch gekennzeichnet**, daß Epoxidverbindungen verwendet werden, bei denen die aminischen Gruppen mit Schutzgruppen verkappt sind und die in den mineralischen Materialien unter Einwirkung von Feuchtigkeit aushärten.

3. Mittel zur Durchführung des Verfahrens nach den Ansprüchen 1 und 2, **dadurch gekennzeichnet**, daß sie mono-, di- und polyfunktionelle Epoxidverbindungen enthalten.

4. Mittel nach Anspruch 3, **dadurch gekennzeichnet**, daß sie Epoxidverbindungen enthalten, die mit reaktiven Aminen und/oder mit mit reaktiven spaltbaren Schutzgruppen verkappten Aminen umgesetzt sind.

5. Mittel nach Ansprüchen 3 oder 4, **dadurch gekennzeichnet**, daß sie Epoxidharz/Härter-Systeme enthalten, die intern flexibilisiert und/oder wasseremulgierbar sind.

6. Mittel nach Anspruch 5, **dadurch gekennzeichnet**, daß sie Epoxidverbindungen enthalten, die mit Säuregruppen oder Dicarbonsäureanhydridgruppen enthaltenden Verbindungen und mit Polyolen umgesetzt sind.

7. Mittel nach einem oder mehreren der Ansprüche 3 bis 6, **dadurch gekennzeichnet**, daß sie als Epoxidverbindungen solche mit fluorierten Struktureinheiten enthalten.

8. Mittel nach einem oder mehreren der Ansprüche 3 bis 7, **dadurch gekennzeichnet**, daß sie als Epoxidverbindungen solche mit Siloxan- oder Polysiloxan-Einheiten enthalten.

9. Mittel nach einem oder mehreren der Ansprüche 3 bis 8, **dadurch gekennzeichnet**, daß sie organische Lösemittel und/oder Wasser enthalten.

10. Mittel nach einem oder mehreren der Ansprüche 3 bis 9, **gekennzeichnet durch** folgende Zusammensetzungen:
| | |
|---|---|
| Verbindungen, die sowohl Epoxidgruppen als auch aminische Gruppen mit freiem oder verkapptem reaktivem Wasserstoff enthalten | 3 -- 100 Gew.-% |
| reaktive Haftvermittler | 0 -- 10 Gew.-% |
| Netzmittel | 0 -- 2 Gew.-% |
| Emulgator | 0 -- 10 Gew.-% |
| Stabilisator | 0 -- 5 Gew.-% |
| Härtungsbeschleuniger | 0 -- 10 Gew.-% |
| Pigment | 0 -- 7 Gew.-% |
| Füllstoffe | 0 -- 30 Gew.-% |
| Lösemittel | 0 -- 97 Gew.-% |
| Wasser | 0 -- 60 Gew.-% |

## Claims

1. A process for impregnating mineral materials with epoxy-resin/hardener systems, **characterized in that** agents, which contain compounds containing both epoxy groups and amine groups with free or protected reactive hydrogen, are used for impregnation.

2. A process according to Claim 1, **characterized in that** epoxy compounds are used in which the amine groups are protected with protective groups and which harden in the mineral materials under the action of moisture.

3. Agents for performing the process according to Claims 1 and 2, **characterized in that** they contain mono-, di- and polyfunctional epoxy compounds.

4. Agents according to Claim 3, **characterized in that** they contain epoxy compounds which are reacted with reactive amines and/or with amines protected with reactive cleavable protective groups.

5. Agents according to Claim 3 or 4, **characterized in that** they contain epoxy-resin/hardener systems which are internally flexibilized and/or water-emulsifiable.

6. Agents according to Claim 5, **characterized in that** they contain epoxy compounds which are reacted with compounds containing acid groups or dicarboxylic acid anhydride groups and with polyols.

7. Agents according to one or more of Claims 3 to 6, **characterized in that** the epoxy compounds which they contain are in the form of epoxy compounds with fluorinated structural units.

8. Agents according to one or more of Claims 3 to 7, **characterized in that** the epoxy compounds which are they contain are in the form of epoxy compounds with siloxane or polysiloxane units.

9. Agents according to one or more of Claims 3 to 8, **characterized in that** they contain organic solvents and/or water.

10. Agents according to one or more of Claims 3 to 9, **characterized by** the following compositions:
| | |
|---|---|
| - compounds containing both epoxy groups and amine groups with free or protected reactive hydrogen | 3 - 100% by weight |
| - reactive adhesion promoters | 0 - 10% by weight |
| - cross-linking agents | 0 - 2% by weight |
| - emulsifier | 0 - 10% by weight |
| - stabilizer | 0 - 5% by weight |
| - hardening accelerator | 0 - 10% by weight |
| - pigment | 0 - 7% by weight |
| - fillers | 0 - 30% by weight |
| - solvents | 0 - 97% by weight |
| - water | 0 - 60% by weight |

## Revendications

1. Procédé d'imprégnation de matériaux minéraux par des systèmes de résine époxy/durcisseur, caractérisé en ce que, pour l'imprégnation, on utilise des produits qui contiennent des composés qui contiennent aussi bien des groupes époxy que des groupes aminés à hydrogène réactif libre ou masqué.

2. Procédé suivant la revendication 1, caractérisé en ce qu'on utilise des composés époxy dans lesquels les groupes aminés sont masqués par des groupes de protection et qui durcissent dans les matériaux minéraux sous l'action de l'humidité.

3. Produits pour la mise en oeuvre du procédé suivant l'une des revendications 1 et 2, caractérisés en ce qu'ils contiennent des composés époxy monofonctionnels, bifonctionnels et polyfonctionnels.

4. Produits suivant la revendication 3, caractérisés en ce qu'ils contiennent des composés époxy qui sont mis à réagir avec des amines réactives et/ou des amines masquées par des groupes de protection réactifs séparables.

5. Produits suivant l'une des revendications 3 et 4 caractérisés en ce qu'ils contiennent des systèmes de résine époxy/durcisseur qui sont flexibilisés de manière interne et/ou peuvent être émulsionnés dans l'eau.

6. Produits suivant la revendications 5, caractérisés en ce qu'ils contiennent des composés époxy qui sont mis à réagir avec des composés contenant des groupes acide ou des groupes anhydride d'acide dicarboxylique et avec des polyols.

7. Produits suivant une ou plusieurs des revendications 3 à 6, caractérisés en ce qu'ils contiennent comme composés époxy ceux présentant des unités structurelles fluorées.

8. Produits suivant une ou plusieurs des revendications 3 à 7, caractérisés en ce qu'ils contiennent comme composés époxy ceux avec des unités de siloxane ou de polysiloxane.

9. Produits suivant une ou plusieurs des revendications 3 à 8, caractérisés en ce qu'ils contiennent des solvants organiques et/ou de l'eau.

10. Produits suivant une ou plusieurs des revendications 3 à 9, caractérisés par les compositions suivantes :
| | |
|---|---|
| composés qui contiennent aussi bien des groupes époxy que des groupes aminés à hydrogène réactif libre ou masqué | 3 - 100 % en poids |
| agent adhérisant réactif | 0 - 10 % en poids |
| agent réticulant | 0 - 2 % en poids |
| agent émulsionnant | 0 - 10 % en poids |
| agent stabilisant | 0 - 5 % en poids |
| accélérateur de durcissement | 0 - 10 % en poids |
| pigment | 0 - 7 % en poids |
| charges | 0 - 30 % en poids |
| solvant | 0 - 97 % en poids |
| eau | 0 - 60 % en poids |
